# EUROPÄISCHE PATENTANMELDUNG

(11) **EP 1 914 570 A2**
(43) Veröffentlichungstag der Anmeldung: **23.04.2008**
(21) Anmeldenummer: 07017345.5
(22) Anmeldetag: 05.09.2007
(51) Int. Cl.: G01V 5/00, G01T 7/00

(54) **Verfahren zur Verbesserung der Detailerkennbarkeit in Röntgenbildern**

(30) Priorität: 10.10.2006 DE 102006047888
(71) Anmelder: Smiths Heimann GmbH, 65205 Wiesbaden (DE)
(72) Erfinder: Henkel, Rainer, 55444 Schweppenhausen (DE)
(74) Vertreter: Dietrich, Barbara

(57) **Zusammenfassung**

Verfahren zur Verbesserung der Detailerkennbarkeit in Röntgenbildern, wobei mittels eines Röntgenprüfgeräts (1) ein Positiv-Röntgenbild eines Objekts (6) angefertigt wird, das Röntgenbild in Objektbereich (10) und Leerbereich (9) unterteilt wird und der Leerbereich (9) des Röntgenbildes abgedunkelt wird.

## Beschreibung

Die vorliegende Erfindung betrifft ein Verfahren zur Verbesserung der Detailerkennbarkeit in Röntgenbildern sowie eine Röntgenanlage zur Durchführung des Verfahrens.

Bei der Sicherheitsüberprüfung von Objekten wie beispielsweise Gepäckstücken auf gefährliche Inhalte werden oftmals Röntgenprüfanlagen eingesetzt, beispielsweise an Flughäfen. Derartige Röntgenprüfgeräte erzeugen üblicherweise ein Positiv-Bild, wobei ein Bildpunkt umso heller ist, je weniger der Röntgenstrahl an diesem Punkt des Objekts bei der Transmission abgeschwächt beziehungsweise absorbiert wird. Das so erzeugte Positiv-Röntgenbild wird, optional nach einer Bildbearbeitung beispielsweise zum farblichen Hervorheben bestimmter Regionen, auf einem Anzeigegerät wie beispielsweise einem Monitor dargestellt. Es hat sich herausgestellt, dass bei einem hohen Dynamikumfang des dargestellten Röntgenbildes der Operator aufgrund von Blendungseffekten Details nur schlecht erkennen kann. Eine Verringerung des Dynamikumfangs der Bildhelligkeit hätte jedoch einen Informationsverlust und somit ein verschlechtertes Detektionsergebnis zur Folge.

Es ist daher die Aufgabe der vorliegenden Erfindung, ein Verfahren und eine Vorrichtung zur Verbesserung der Detailerkennbarkeit in Röntgenbildern bereitzustellen, wobei kein Informationsverlust eintritt.

Gelöst wird diese Aufgabe erfindungsgemäß durch das Verfahren mit den Merkmalen des Patentanspruchs 1 und eine Röntgenprüfanlage mit den Merkmalen des Patentanspruchs 9. Weitere vorteilhafte Ausgestaltungsformen sind den abhängigen Patentansprüchen zu entnehmen.

Im Rahmen der Erfindung wurde festgestellt, dass eine Blendung des Bedienpersonals der Röntgenprüfanlage durch helle Bildbereiche zu einer schlechteren Detailerkennbarkeit führt. Dies wird erfindungsgemäß dadurch verhlindert, dass nicht von dem zu untersuchenden Objekt eingenommene Bereiche des Röntgenbildes, die üblicherweise sehr hell sind, abgedunkelt.werden.

Zunächst wird mittels einer Röntgenprüfanlage ein Positiv-Röntgenbild eines Objekts angefertigt, das Röntgenbild in einen Objektbereich und einen Leerbereich unterteilt und der Leerbereich des Röntgenbildes abgedunkelt. Der Objektbereich ist derjenige Bereich des Röntgenbildes, in dem sich das zu untersuchende Objekt befindet, der Leerbereich ist der übrige Teil des Röntgenbildes. Bei dem Objektbereich beziehungsweise dem Leerbereich muss es sich nicht um jeweils einen einzigen, zusammenhängenden Bereich handeln.

Die Abdunklung des Leerbereichs erfolgt zum Beispiel durch das Ersetzen der Bildinformation im Leerbereich durch eine konstante Farbe, bevorzugt Grau mit einer Helligkeit von beispielsweise 0 %, 20 %, 50 % oder 75 %, wobei eine Helligkeit von 0 % schwarz und eine Helligkeit von 100 % weiß entspricht.

Alternativ wird zur Abdunklung des Leerbereichs die Helligkeit jedes Bildpunktes in diesem Bereich mit einem Faktor multipliziert, beispielsweise 0,2, 0,5 oder 0,75. In einer weiteren Alternative erfolgt die Abdunklung des Leerbereichs durch Reduzierung der Helligkeitswerte der Bildpunkte im Leerbereich um einen bestimmten Wert. Ergibt diese Differenz einen Helligkeitswert, der geringer ist als der minimal mögliche Helligkeitswert, wird das Ergebnis durch den minimalen Helligkeitswert ersetzt. Die erste Alternative weist den Vorteil auf, dass eine einfache Ersetzung des Leerbereichs durch eine festgelegte Farbe beziehungsweise Helligkeit nur einen geringen Rechenaufwand erfordert. Die zweite und dritte Alternative weisen den Vorteil auf, dass auch im Leerbereich Bildinformationen erhalten bleiben.

Weiterhin alternativ erfolgt Abdunklung des Leerbereichs durch Verwendung einer Lookup-Tabelle. Dies bedeutet, dass einem bestimmten Helligkeitswert im Leerbereich entsprechend einer Transformationstabelle ein anderer Helligkeitswert zugeordnet wird. Dies hat die Vorteile, dass Lookup-Tabellen eine schnelle Berechnung der Abdunklung des Leerbereichs ermöglichen und verschiedenen Helligkeitswertebereichen unterschiedliche Abdunklungsgrade zugeordnet werden können. Darüber hinaus können dem Bediener über verschiedene Lookup-Tabellen unterschiedliche Abdunklungsmodi zur Verfügung gestellt werden.

Bevorzugt ist die Abdunklung des Leerbereichs durch den Betrachter des Röntgenbildes zuschaltbar. Dadurch wird es dem Betrachter ermöglicht, zwischen der herkömmlichen Darstellung des Röntgenbildes und der erfindungsgemäßen modifizierten Darstellung zu wechseln. Alternativ erfolgt die Abdunklung automatisch, beispielsweise abhängig von der Helligkeit des Leerbereichs, dem Verhältnis der Helligkeiten des Leerbereiches und des Objektbereichs oder wie in der Konfiguration der Röntgenprüfanlage festgelegt. Als Helligkeit kommt die durchschnittliche Helligkeit des Bereichs oder die maximale und/oder minimale Helligkeit des Bereichs oder in Betracht. Die Konfiguration der Röntgenprüfanlage enthält beispielsweise die Angabe, ob die Abdunklung grundsätzlich ein- oder ausgeschaltet ist.

In einer Ausgestaltungsform der Erfindung ist der Grad der Abdunklung variabel. Dies bedeutet, dass bei einer gleichmäßigen Füllung des Leerbereichs die Farbe beziehungsweise die Helligkeit, bei einer Multiplikation der Helligkeit der Abdunklungsfaktor oder bei einer Bestimmung der Helligkeit des Leerbereichs durch Differenzbildung der Wert des Subtrahenten einstellbar ist. Diese Einstellung erfolgt automatisch, beispielsweise anhand der durchschnittlichen Helligkeit des Röntgenbildes oder des Objektbereiches. Alternativ ist der Grad der Abdunklung durch den Benutzer einstellbar.

Bevorzugt werden der Objektbereich und/oder der Leerbereich des Röntgenbildes durch eine Bildverarbeitung ermittelt. Im Leerbereich des Röntgenbildes wird die Röntgenstrahlung durch die Luft und eine eventuell vorhandene Transporteinrichtung nur geringfügig abgeschwächt. Im Objektbereich hingegen befindet sich zusätzlich das zu untersuchende Objekt, das eine weitere Abschwächung der transmittierten Röntgenstrahlung bewirkt. Aus dem unterschiedlichen Transmissionsgrad und der damit verbundenen unter-schiedlichen Helligkeit des Röntgenbildes ist die Objektkontur ermittelbar und das Röntgenbild somit in Objektbereich und Leerbereich unterteilbar.

Alternativ oder zusätzlich wird der Objektbereich oder der Leerbereich des Röntgenbildes durch Sensoren wie beispielsweise Lichtschranken oder Abstandssensoren ermittelt. Mittels dieser Sensoren wird die Lage des zu untersuchenden Objekts im Röntgenprüfgerät festgestellt. Diese Lage korrespondiert zur Position des Objektsbereichs im Röntgenbild.

In einer Ausführungsform der Erfindung erfolgt die Unterteilung des Röntgenbildes in Objektbereich und Leerbereich approximativ, beispielsweise durch Rechtecke. Das bedeutet, dass der Objektbereich im Röntgenbild durch ein oder mehrere Rechtecke gebildet wird, die annähernd die Kontur des Objekts nachbilden. Dies führt zu einer einfacheren Abdunklung des Leerbereichs des Röntgenbildes, da der Leerbereich bei Approximation des Objekts beispielsweise durch Rechtecke von geraden Kanten begrenzt wird.

Bevorzugt wird die Kontur des Objekts exakt erkannt und im Röntgenbild nachgebildet. Dies führt dazu, dass sich der Leerbereich exakt an das Objekt anschmiegt und somit in einem größtmöglichen Bereich des Röntgenbildes eine Abdunklung stattfindet.

Optional ist zwischen der tatsächlichen Kontur des Objekts und der Trennung zwischen Objektbereich und Leerbereich im Röntgenbild ein Sicherheitsabstand vorgesehen. Dies bedeutet, dass ein durch den Sicherheitsabstand vorgegebener Rand um die ermittelte Kontur des zu untersuchenden Objekts dem Objektbereich des Röntgenbildes zugeordnet wird. Es ergibt sich somit eine Korona beziehungsweise ein Halo um das Objekt herum. Dadurch wird erreicht, dass auch bei nicht optimaler Erkennung der Objektkontur kein Bereich des Objekts abgedunkelt wird.

Eine Röntgenprüfanlage zu Durchführung des Verfahrens, weist ein Röntgenprüfgerät, eine Anzeigevorrichtung sowie Mittel zur Ermittlung und Abdunklung eines Leerbereichs des Röntgenbildes auf. Dabei erzeugt das Röntgenprüfgerät das Positiv-Röntgenbild des zu untersuchenden Objektes. Das Mittel zur Abdunklung des Leerbereiches führt wie vorstehend beschrieben die Abdunklung durch. Die Anzeigevorrichtung dient der Anzeige des ursprünglichen sowie des abgedunkelten Röntgenbildes.

In einer Ausführungsform weist die Röntgenprüfanlage ein Betätigungselement zur Ausführung der Abdunklung des Leerbereichs auf. Bevorzugt wird bei Nichtbetätigung des Betätigungselements das originale Röntgenbild und bei Betätigung des Betätigungselements das im Leerbereich abgedunkelte Röntgenbild dargestellt.

Eine erfindungsgemäße Röntgenprüfanlage weist optional ein Betätigungselement zur Beeinflussung des Grades der Abdunklung des Leerbereichs auf. Somit kann der Benutzer der Röntgenprüfanlage wie vorstehend beschrieben die Abdunklung derart beeinflussen, dass eine optimäle Detailerkennbarkeit erzielt wird.

Die Erfindung soll anhand eines Ausführungsbeispiels näher erläutert werden. Dabei zeigt
- Figur 1: eine Röntgenprüfanlage,
- Figur 2: ein originales Röntgenbild,
- Figur 3: das Röntgenbild aus Figur 2 mit abgedunkeltem Leerbereich und
- Figur 4: das Röntgenbild aus Figur 2 mit approximiertem Objektbereich.

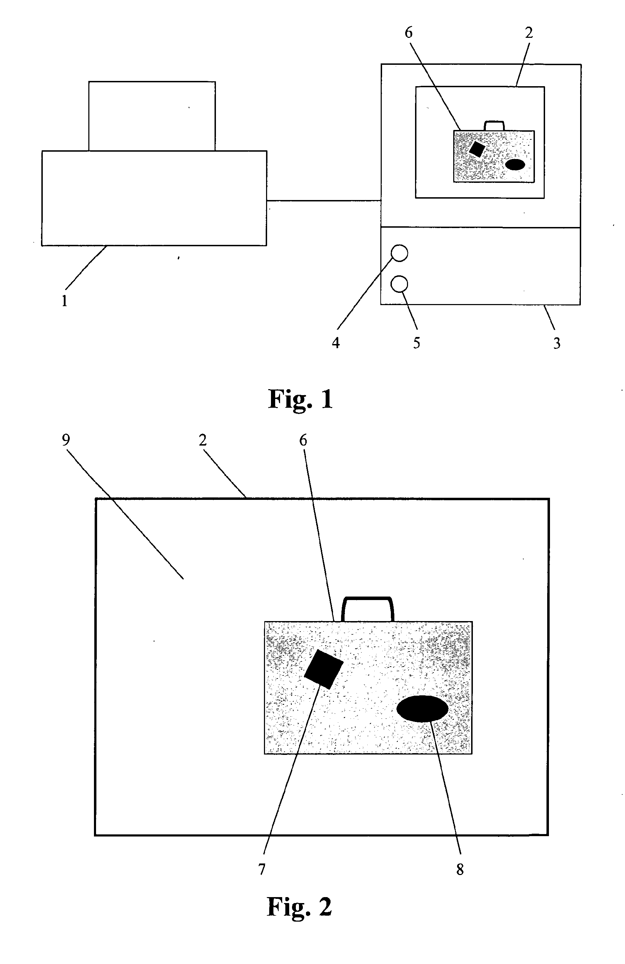

Figur 1 zeigt schematisch eine Röntgenprüfanlage mit einem Röntgenprüfgerät 1, einem Monitor 2 und einer Bedienkonsole 3. Im vorliegenden Ausführungsbeispiel dient die Röntgenprüfanlage der Sicherheitsüberprüfung von Objekten, beispielsweise in einem Flughafen oder bei der Zugangskontrolle zu einem Gebäude.
Ein Koffer 6 befindet sich im Röntgenprüfgerät 1, in dem er mit einer Röntgenstrahlung beaufschlagt und die Stärke der transmittierten Röntgenstrahlung detektiert wird. Aus der Intensität der transmittierten Strahlung berechnet die Röntgenprüfanlage das auf dem Bildschirm 2 dargestellte Bild des Koffers 6. Es handelt sich um eine Positiv-Darstellung, bei der stark absorbierende Bereiche dunkel und schwach absorbierende Bereiche hell dargestellt sind.

Figur 2 zeigt eine vergrößerte Darstellung des auf dem Bildschirm 2 wiedergegebenen Röntgenbildes. Der Leerbereich 9 ist der Bereich des Röntgenbildes, der nicht von dem zu untersuchenden Objekt eingenommen wird. In diesem Bereich durchdringt die Röntgenstrahlung überwiegend Luft und je nach Ausgestaltung des Röntgenprüfgeräts 1 beispielsweise ein Förderband oder Transportrollen. In dem von dem Koffer 6 eingenommenen Bereich des Röntgenbildes durchdringt die Röntgenstrahlung zusätzlich den Koffer 6, weshalb in diesem sogenannten Objektbereich 10 die Intensität der transmittierten Strahlung geringer ist als im Leerbereich 9. Aus diesem Unterschied berechnet die in der Röntgenprüfanlage ablaufende Bildverarbeitung die Kontur des Koffers 6 und somit die Grenze zwischen dem Leerbereich 9 und dem vom Koffer 6 eingenommenen Objektbereich 10.

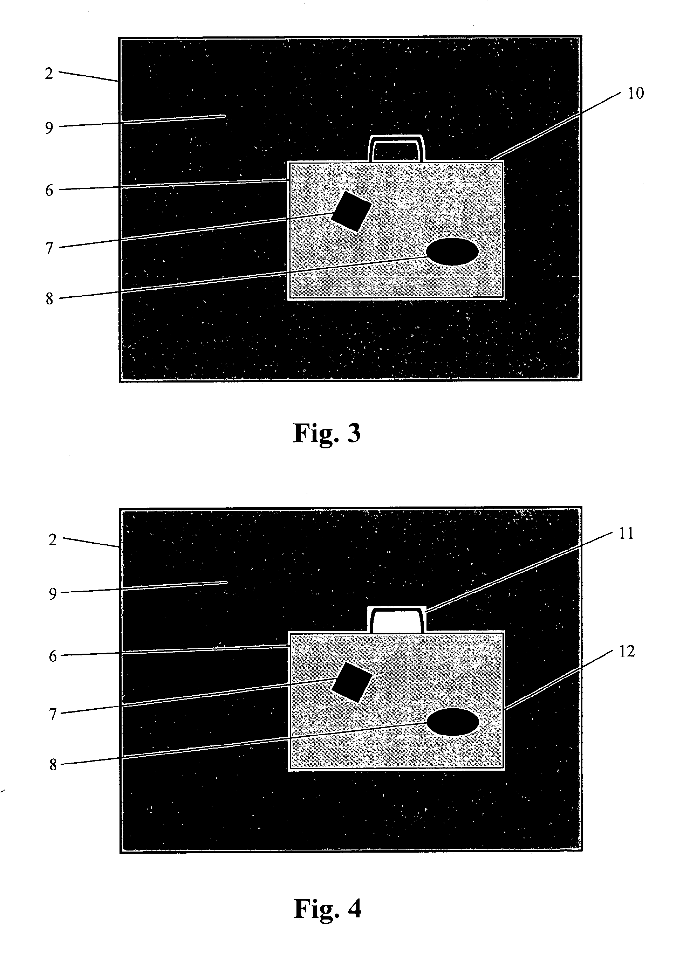

In einem nächsten Verfahrensschritt wird der Leerbereich 9 des Röntgenbildes abgedunkelt. Im vorliegenden Ausführungsbeispiel geschieht dies dadurch, dass der Helligkeitswert jedes Bildpunktes im Leerbereich 9 mit einem Abdunklungsfaktor 0,25 multipliziert wird. Daraus ergibt sich das in Figur 3 dargestellte modifizierte Röntgenbild. Durch die Abdunklung des Leerbereiches 9 treten der Koffer 6 und die darin angeordneten Gegenstände 7 und 8 im Röntgenbild deutlicher hervor. Insbesondere wird eine Blendung des Bedienpersonals der Röntgenprüfanlage vermindert, da von dem Bildschirm 2 nun eine verringerte Gesamthelligkeit abgestrahlt wird.

Bei dem in Figur 3 dargestellten modifizierten Röntgenbild ist der Objektbereich 10 geringfügig größer als die Kontur des Koffers 6. Dadurch wird sichergestellt, dass nicht unbeabsichtigt Bereiche des Röntgenbildes, in denen sich das Objekt befindet, dem Leerbereich 9 zugeordnet werden.

Mittels des an der Bedienkonsole 3 angeordneten Betätigungselements 4 in Form einer Taste schaltet der Bediener zwischen den Darstellungen in Figur 2 und Figur 3 um. Mittels des optionalen Drehreglers 5 kann der Bediener den Abdunklungsfaktor und somit die Stärke der Abdunklung des Leerbereiches 9 beeinflussen.

Figur 4 zeigt das Röntgenbild aus Figur 2, wobei der Objektbereich durch zwei Rechtecke 11 und 12 approximiert wird. Das Rechteck 11 bildet den Hauptteil des Koffers 6 nach und das Rechteck 12 den Griff.

Das vorstehende Ausführungsbeispiel ist rein exemplarisch und nicht als beschränkend zu verstehen. Anstatt des Koffers 6 kann mittels der Röntgenprüfanlage jedes beliebige Objekt analysiert werden. Die Kontur des zu untersuchenden Objektes kann anstatt durch eine Bildverarbeitung auch beispielsweise durch Sensoren wie Lichtschranken oder Abstandssensoren bestimmt werden. Neben der Multiplikation der Helligkeitswerte der Bildpunkte im Leerbereich ist eine Ersetzung durch einen konstanten Helligkeitswert oder die Subtraktion eines Helligkeitswertes möglich. Der in Figur 3 dargestellte Sicherheitsabstand zwischen der tatsächlichen Kontur des Objekts und der Trennung zwischen Objektbereich und Leerbereich ist optional, so dass in einer alternativen Ausgestaltungsform dieser Trennung mit der ermittelten Kontur des Objekts zusammenfällt.

## Patentansprüche

1. Verfahren zur Verbesserung der Detailerkennbarkeit in Röntgenbildern, wobei mittels eines Röntgenprüfgeräts (1) ein Positiv-Röntgenbild eines Objekts (6) angefertigt wird, das Röntgenbild in Objektbereich (10) und Leerbereich (9) unterteilt wird und der Leerbereich (9) des Röntgenbildes abgedunkelt wird.

2. Verfahren nach Anspruch 1, **dadurch gekennzeichnet, dass** die Abdunklung des Leerbereiches (9) durch den Betrachter des Röntgenbildes zuschaltbar ist.

3. Verfahren nach Anspruch 1, **dadurch gekennzeichnet, dass** die Abdunklung des Leerbereiches (9) automatisch erfolgt.

4. Verfahren nach einem der Ansprüche 1 bis 3, **dadurch gekennzeichnet, dass** der Grad der Abdunklung variabel ist.

5. Verfahren nach einem der Ansprüche 1 bis 4, **dadurch gekennzeichnet, dass** der Objektbereich (10) und/oder der Leerbereich (9) des Röntgenbildes durch eine Bildverarbeitung ermittelt wird.

6. Verfahren nach einem der Ansprüche 1 bis 5, **dadurch gekennzeichnet, dass** der Objektbereich (10) und/oder der Leerbereich (9) des Röntgenbildes durch Sensoren wie beispielsweise Lichtschranken oder Abstandssensoren ermittelt wird.

7. Verfahren nach einem der Ansprüche 1 bis 6, **dadurch gekennzeichnet, dass** die Unterteilung des Röntgenbildes in Objektbereich (10) und Leerbereich (9) approximativ erfolgt, beispielsweise durch Rechtecke (11, 12).

8. Verfahren nach einem der Ansprüche 1 bis 6, **dadurch gekennzeichnet, dass** die Kontur des Objekts (6) exakt erkannt und nachgebildet wird.

9. Verfahren nach einem der Ansprüche 1 bis 8, **dadurch gekennzeichnet, dass** zwischen der ermittelten Kontur des Objekts (6) und der Trennung zwischen Objektbereich (10) und Leerbereich (9) im Röntgenbild ein Sicherheitsabstand vorgesehen ist.

10. Röntgenprüfanlage zur Durchführung des Verfahrens nach einem der Ansprüche 1 bis 9, aufweisend ein Röntgenprüfgerät (1), eine Anzeigevorrichtung (2) sowie Mittel zur Ermittlung und Abdunklung eines Leerbereiches (9) des Röntgenbildes.

11. Röntgenprüfanlage nach Anspruch 10, **gekennzeichnet durch** ein Betätigungselement (4) zur Ausführung der Abdunklung des Leerbereiches (9).

12. Röntgenprüfanlage nach einem der Ansprüche 10 oder 11, **gekennzeichnet durch** ein Betätigungselement (5) zur Beeinflussung des Grades der Abdunklung des Leerbereiches (9).
